# EUROPÄISCHE PATENTSCHRIFT

(11) **EP 2 160 014 B1**
(45) Veröffentlichungstag und Bekanntmachung des Hinweises auf die Patenterteilung: **18.05.2011**
(21) Anmeldenummer: 08015137.6
(22) Anmeldetag: 27.08.2008
(51) Int. Cl.: H04N 5/00

(54) **Modularer Digitaler Fernsehdecoder**
Modular digital television decoder
Codeur télévisuel numérique modulaire

(43) Veröffentlichungstag der Anmeldung: 03.03.2010
(73) Patentinhaber: Novabase Digital TV Technologies GmbH, 85356 München (DE)
(72) Erfinder: Franke, Volker, 99510 Apolda (DE); Pauli, Michael, 04105 Leipzig (DE); Richardt, Guido, 99974 Mühlhausen (DE)
(74) Vertreter: Maiwald Patentanwalts GmbH

(56) Entgegenhaltungen:
- EP-A- 1 156 671
- EP-A- 1 631 072
- WO-A-02/35838
- WO-A-03/107537
- WO-A-2007/072211
- US-A1- 2005 097 616
- US-A1- 2007 028 260

## Beschreibung

### Gebiet der Erfindung

Die vorliegende Erfindung betrifft einen modularen digitalen Fernsehdecoder sowie einen Empfänger für digitale Multimediasignale, und insbesondere einen modularen digitalen Fernsehdecoder und einen Empfänger für digitale Multimediasignale, die eine modulare Zusammenstellung und eine Verringerung der Baumaße der entsprechenden Komponenten erlauben.

### Hintergrund der Erfindung

Digitale Fernsehempfangsgeräte (DFEG) sind zum überwiegenden Teil als so genannte Set-Top-Boxen (STB) realisiert, die als separate Beistellgeräte in der Nähe eines Wiedergabegerätes, beispielsweise eines Fernsehgerätes, platziert werden können. In diesen Set-Top-Boxen (STB) sind im Regelfall eine Vielzahl funktioneller Einheiten implementiert. Dabei unterscheidet man im Wesentlichen in ein Frontend-Modul und ein Backend- Modul. In dem Frontend-Modul sind beispielsweise ein Tuner und ein Demodulator implementiert. In einem Backend-Modul sind beispielsweise ein Demultiplexer, ein Descrambler, ein programmierbarer Audio/Videodecoder, ein flüchtiger Arbeitsspeicher (RAM) sowie ein nichtflüchtiger Programm- und Datenspeicher (NVRAM) implementiert. Ferner sind in der Regel eine Stromversorgung, Anzeige- und Bedienelemente sowie verschiedene Anschlüsse vorgesehen. Bedien- und Anzeigeelemente können dabei beispielsweise LEDs, Infrarot Fernbedienungsempfänger, Kartenleser, Tasten sowie numerische oder alphanumerische Anzeigen sein. Die vorgesehenen Anschlüsse können beispielsweise ein Stromversorgungsanschluss, ein Hochfrequenzeingang (HF) und gegebenenfalls ein HF-Durchschleifausgang sowie analoge und/oder digitale Video- und Audio-Ausgänge sein.

Da die Set-Top-Boxen auf den unterschiedlichsten Märkten weltweit vertrieben werden, müssen diese Set-Top-Boxen insbesondere hinsichtlich der Stromversorgung und hinsichtlich des Eingangsignals auf den jeweiligen Markt angepasst werden, wodurch beispielsweise unterschiedliche Stromversorgungseinheiten bezüglich der Netzspannung und der Netzfrequenz vorgesehen werden müssen, ebenso wie entsprechend angepasste Tuner und Demodulator Konfigurationen. Andererseits erfolgt die Verarbeitung digitaler Signale in einem digitalen Fernsehempfangsgerät entsprechend überregionaler und internationaler Standards, sodass an den entsprechenden Video- bzw. Audioausgängen einer Set-Top-Box ein einheitliches Signal vorliegt.

Ein sehr großer Aufwand besteht somit im Bereich bekannter Set-Top-Boxen darin, dass diese auf dem jeweiligen nationalen bzw. regionalen Markt angepasst werden müssen.

Patent US2007/028260 beschreibt ein Host Fernsehgerät, welches mit einem externen Modul verbindbar ist. Das Modul enthält Entschlüsselungs-, Demultiplex- und Decodiereinheiten und ist über eine lösbare Schnittstelle mit dem Host Fernsehgerät verbunden. Das Host Fernsehgerät enthält Tuner- und Demodulatoreinheiten, sowie eine Verbindung zu einem Ausgabegerät.

### Zusammenfassung der Erfindung

Es kann daher als eine Aufgabe der vorliegenden Erfindung betrachtet werden, eine Vorrichtung zum Decodieren digitaler Multimediasignale bzw. eine Vorrichtung zum Empfang von digitalen Multimediasignalen bereitzustellen, die eine vereinfachte flexible Anpassung an nationale bzw. regionale Gegebenheiten erlaubt.

Die Aufgabe der vorliegenden Erfindung wird gelöst durch den Gegenstand der unabhängigen Ansprüche, wobei beispielhafter Ausführungsformen in abhängigen Ansprüchen verkörpert sind.

Gemäß einer beispielhaften Ausführungsform der Erfindung wird eine Vorrichtung zum Decodieren digitaler Multimediasignale bereitgestellt mit einer Backend-Baugruppe, die ausgelegt ist für die Datenverarbeitung digitaler Multimediasignale, eine High Definition Multimedia Interface (HDMI) Schnittstelle, die ausgelegt ist zum lösbaren Ankoppeln eines Multimediagerätes, sowie eine Frontend-Schnittstelle, die ausgelegt ist zum Ankoppeln einer externen Frontend-Baugruppe.

Auf diese Weise kann eine Vorrichtung zum Decodieren digitaler Multimediasignale bereitgestellt werden, die auf Grund ihrer Ankoppelbarkeit an eine externe Frontend-Baugruppe kompakt ausgestaltet werden kann, wobei die Frontend-Baugruppe wiederum eine regional bzw. marktabhängige Spannungsversorgungseinheit bzw. Tuner und Demodulationseinheiten aufweisen kann. Die Vorrichtung zum Decodieren digitaler Multimediasignale kann selbst wiederum an ein Multimediagerät angekoppelt werden, beispielsweise ein HDMI-fähiges Fernsehgerät mit Bildröhre oder ein HDMI-fähiges Plasma- oder LCD Display. Da die verhältnismäßig volumenaufwendigen Komponenten einer Frontend-Gruppe nicht selbst in der Vorrichtung zum Decodieren digitaler Multimediasignale vorhanden sein müssen, kann die Vorrichtung zum Decodieren digitaler Multimediasignale kompakt ausgestaltet sein; so kann die Vorrichtung zum Decodieren digitaler Multimediasignale in Form eines Sticks ausgestaltet werden, der direkt in einen entsprechenden Anschluss eines HDMI-fähigen Multimediagerätes eingesteckt werden kann. Sämtliche Funktionalitäten einer Frontend-Baugruppe können über eine entsprechende Frontend-Schnittstelle der Vorrichtung zum Decodieren digitaler Multimediasignale bereitgestellt werden. Innerhalb der Vorrichtung zum Decodieren digitaler Multimediasignale, beispielsweise in Form eines High Definition (HD) Sticks kann dann beispielsweise die Funktionalität enthalten sein eines Demultiplexens, eines Decodierens, eines Descramblens etc. Ferner kann aufgrund der getrennten Ausgestaltung der Vorrichtung zum Decodieren digitaler Multimediasignale und einer zugehörigen externen Frontend-Baugruppe, beispielsweise ein Störungseinfluss der Frontend-Baugruppe aufgrund von Hochfrequenzsignalen auf die Backend-Baugruppe vermindert werden. Ferner können Störeinflüsse aufgrund eines Netzteils vermindert werden, insbesondere wenn starke Störungen über die Spannungsversorgung des jeweiligen regionalen Spannungsversorgungsnetzes zu erwarten sind. Darüber hinaus können auch umgekehrte Störeinflüsse von der Backendbaugruppe auf die Frontendbaugruppe vermieden werden. Die hochfrequenten digitalen Takte im Backend, heutzutage im Bereich der Rundfunkempfangsfrequenzen > 100MHz, können somit von der Frontendbaugruppe entkoppelt werden. Weiterhin kann durch die getrennte Ausgestaltung ein Wärmeeintrag aufgrund des Netzteiles bzw. der Tuner und Demodulatorbaugruppe auf die Backend-Baugruppe vermieden werden. Beispielsweise kann die Backend-Baugruppe direkt mit einer eingebauten Steckvorrichtung in das Multimediagerät eingesteckt werden, während über die Frontend-Schnittstelle eine entsprechende Frontend-Baugruppe angeschlossen werden kann, die jedoch auch entfernt zu der Vorrichtung zum Decodieren digitaler Multimediasignale vorgesehen sein kann und mit dieser über beispielsweise eine Kabelverbindung verbunden sein kann. Auf diese Weise können auch die analoge Datenverarbeitung in einer Frontend-Baugruppe und die digitale Datenverarbeitung ein einer Backend-Baugruppe getrennt werden.

Gemäß der Erfindung ist die Frontend-Schnittstelle ausgelegt zum lösbaren Ankoppeln einer Frontend-Baugruppe.

Auf diese Weise kann aufgrund der lösbaren Ankoppelung der Vorrichtung zum Decodieren digitaler Multimediasignale an eine externe Frontend-Baugruppe flexibel auf regionale Marktgegebenheiten reagiert werden, insbesondere auf unterschiedliche Netzspannungshöhen und Netzfrequenzen sowie auf unterschiedliche Gegebenheiten bezüglich der bereitgestellten Empfangssignale. Dadurch kann ohne Veränderung der Vorrichtung zum Decodieren digitaler Multimediasignale, insbesondere deren Backend-Baugruppe, den regionalen Marktunterschiede lediglich durch eine entsprechende Anpassung der Frontend-Baugruppe entsprochen werden. Insbesondere bei lateinamerikanischen Märkten liegt eine von den europäischen Märkten abweichende Netzfrequenz von 60 Hz vor. Ferner können beispielsweise in Lateinamerika auch andere als in Europa übliche Übertragungsstandards verwendet werden, wie beispielsweise ISDB-T anstelle von DVB-T, sodass durch das entsprechende Vorsehen einer angepassten Frontend-Baugruppe die eigentliche Vorrichtung zum Decodieren digitaler Multimediasignale beibehalten werden kann.

Gemäß einer beispielhaften Ausführungsform der Erfindung weist die Frontend-Schnittstelle einen Ankoppelbereich auf zum Ankoppeln der Spannungsversorgung an die Vorrichtung zum Decodieren digitaler Multimediasignale.

Auf diese Weise kann die Spannungsversorgung für eine Backend-Baugruppe bzw. für die Vorrichtung zum Decodieren digitaler Multimediasignale in einer externen Frontend-Baugruppe vorgesehen sein, sodass für die Spannungsversorgung der Frontend-Baugruppe und die Spannungsversorgung der Backend-Baugruppe die gleichen Spannungsversorgungskomponenten verwendet werden können. Ferner kann die Wärmeentwicklung in der Vorrichtung zum Decodieren digitaler Multimediasignale reduziert werden, da durch ein externes vorgesehenes Netzteil vermieden werden kann, dass beispielsweise Transformator- oder Schaltnetzteilverluste in Form von Wärme auf die Vorrichtung zum Decodieren digitaler Multimediasignale wirken. Dies ist insbesondere dann von Bedeutung, wenn die Vorrichtung zum Decodieren digitaler Multimediasignale kleine oder sehr kleine Abmessungen aufweist, insbesondere wenn die Vorrichtung zum Decodieren digitaler Multimediasignale in Form eines Sticks vorgesehen ist.

Gemäß einer beispielhaften Ausführungsform der Erfindung weist die Backend-Baugruppe eine Baueinheit auf, aus einer Gruppe bestehend aus einer Datenverarbeitungseinheit, einer RAM-Speichereinheit, einer Flash-Speichereinheit und einer Smartcard-Verarbeitungseinheit. Auf diese Weise kann eine Verarbeitung von Signalen innerhalb der Vorrichtung zum Decodieren digitaler Multimediasignale vorgenommnen werden, die auf Grundlage der von einem Demodulator abgegebenen Signale erfolgt.

Gemäß einer beispielhaften Ausführungsform der Erfindung weist die Datenverarbeitungseinheit wenigstens eine Baueinheit auf aus einer Gruppe bestehend aus einer Demultiplexeinheit, einer Descrambling-Einheit, einer Entschlüsselungseinheit, einer MPEG Decodierungseinheit und einer Digital-/Analogwandlereinheit.

Auf diese Weise kann innerhalb der Vorrichtung zum Decodieren digitaler Multimediasignale eine Verarbeitung eines digitalen Datenstroms erfolgen, der von einem Frontend-Modul über die Frontend-Schnittstelle an die Vorrichtung zum Decodieren digitaler Multimediasignale geleitet wird.

Gemäß einer beispielhaften Ausführungsform der Erfindung weist die Datenverarbeitungseinheit eine Smartcard-Verarbeitungseinheit sowie entweder eine Descrambling-Einheit oder eine Entschlüsselungseinheit zum Empfangen verschlüsselter Programme auf.

Auf diese Weise kann innerhalb der Vorrichtung zum Decodieren digitaler Multimediasignale unter Berücksichtigung einer durch eine Smartcard vorgenommene Personalisierung ein Empfang verschlüsselter Programme vorgenommen werden, für die ein Smartcard-Inhaber eine Berechtigung aufweist. Insbesondere lassen sich sämtliche Maßnahmen bezüglich einer Personalisierung und einer Erzeugung von Signalen für ein Multimediaempfangsgerät innerhalb der kompakten Vorrichtung zum Decodieren digitaler Multimediasignale realisieren, sodass diese Vorrichtung zum Decodieren digitaler Multimediasignale beispielsweise in Form eines Sticks vorgesehen werden kann. Die Ausgestaltung in Form eines Sticks erlaubt beispielsweise die Befestigung der Vorrichtung zum Decodieren digitaler Multimediasignale direkt an dem Multimediaempfangsgerät, wobei diese Befestigung im Regelfall auf der Rückseite des Multimediaempfangsgerätes erfolgt. Mittels einer entsprechenden Ausgestaltung der Steckverbindung kann beispielsweise auch auf eine weitere Befestigung verzichtet werden, bzw. der Stick mit weiteren sekundären lösbaren oder nichtlösbaren Befestigungsmitteln an dem Multimediaempfangsgerät befestigt werden.

Gemäß einer beispielhaften Ausführungsform der Erfindung weist die Backend-Baugruppe wenigstens eine Datenverarbeitungseinheit, eine RAM-Speichereinheit und eine Flash-Speichereinheit auf und die Datenverarbeitungseinheit weist wenigstens eine Demultiplexeinheit, eine MPEG-Decodierungseinheit und eine Digital-/Analogwandlereinheit auf.

Auf diese Weise können sämtliche für digitale Verarbeitung und Bereitstellung von digitalen Multimediasignalen erforderlichen Funktionen auf bzw. in der Vorrichtung zum Decodieren digitaler Multimediasignale konzentriert werden.

Gemäß einer beispielhaften Ausführungsform der Erfindung ist die Vorrichtung zum Decodieren digitaler Multimediasignale ferner versehen mit einer Bedienschnittstelle, die ausgelegt ist, um einen Datenaustausch zwischen einem Bediengerät und der Vorrichtung zum Decodieren digitaler Multimediasignale zu erlauben.

Auf diese Weise kann eine Bedienung der Vorrichtung zum Decodieren digitaler Multimediasignale vorgenommen werden. Dies kann beispielsweise über ein externes Tastaturfeld erfolgen, jedoch ebenso über beispielsweise eine nichtdrahtgebundene Schnittstelle, über die beispielsweise eine Infrarottastatur oder Infrarotmaus mit der Vorrichtung zum Decodieren digitaler Multimediasignale verwendet werden kann. Auf diese Weise kann die Vorrichtung zum Decodieren digitaler Multimediasignale kompakt gehalten werden. Ferner ist es möglich, über beispielsweise die Frontend-Schnittstelle eine derartige Bedienschnittstelle zu implementieren, sodass beispielsweise eine Bedieneinheit auch über ein externes Gerät angeschlossen werden kann, welches externe Gerät dann über die Frontend-Schnittstelle an die Vorrichtung zum Decodieren digitaler Multimediasignale angeschlossen werden kann.

Gemäß einer beispielhaften Ausführungsform der Erfindung ist die Bedienschnittstelle als eine Infrarotschnittstelle ausgelegt.

Auf diese Weise kann beispielsweise eine platzaufwendige Steckverbindung vermieden werden und ferner auch die Anzahl von Leitungen vermindert werden, die mit der Vorrichtung zum Decodieren digitaler Multimediasignale verbunden sind.

Gemäß der Erfindung wird eine Vorrichtung zum Empfang von digitalen Multimediasignalen bereitgestellt, wobei die Vorrichtung zum Empfang digitaler Multimediasignale eine Signaleingangsschnittstelle für digitale Multimediasignale, eine Frontend-Baugruppe, die ausgelegt ist zum Empfangen von digitalen Multimediasignalen, einer Spannungsversorgungsvorrichtung für die Vorrichtung zum Empfangen von digitalen Multimediasignalen und eine Backend-Schnittstelle aufweist, die ausgelegt ist zum Ankoppeln einer externen Backend-Baugruppe.

Auf diese Weise kann eine Vorrichtung zum Empfangen von digitalen Multimediasignalen bereitgestellt werden, ohne gleichzeitig innerhalb der Vorrichtung zum Empfangen digitaler Multimediasignale eine Vorrichtung vorsehen zu müssen, die ausgelegt ist zum Decodieren von digitalen Multimediasignalen. Mit anderen Worten, kann der Vorgang des Empfanges von digitalen Multimediasignalen räumlich getrennt werden von dem Vorgang zum Decodieren von digitalen Multimediasignalen. Somit kann die Vorrichtung zum Empfangen von digitalen Multimediasignalen mit einem begrenzten Umfang von Bauelementen ausgelegt werden zum Anpassen an regionale Märkte, beispielsweise hinsichtlich der Netzspannungen und Netzfrequenzen sowie hinsichtlich von Standards von zu empfangenden digitalen Multimediasignalen. Über die Signaleingangsschnittstelle können dabei digitale Multimediasignale empfangen werden. Digitale Multimediasignale sind dabei als Signale zu verstehen, die zur Verarbeitung und Anzeige in digitalen Multimediageräten dienen. Dabei können die digitalen Multimediasignale durchaus analoge Charakteristiken aufweisen, sowie sie bei einer Übertragung über drahtgebundene oder drahtlose Übertragungskanäle stattfinden können. In einer Frontend-Baugruppe kann dann ein Empfang der durch die Signaleingangsschnittstelle eingegangenen digitalen Multimediasignalen erfolgen. Durch die Spannungsversorgungsvorrichtung kann die Vorrichtung zum Empfangen von digitalen Multimediasignalen mit einer entsprechenden Versorgungsspannung versorgt werden. Über eine vorgesehene Backend-Schnittstelle kann eine externe Backend-Baugruppe angekoppelt werden, wodurch über die Backend-Schnittstelle sowohl die empfangenen und demodulierten digitalen Multimediasignale an eine externe Backend-Baugruppe weitergegeben werden können, als auch eine Spannungsversorgung für eine externe Backend-Baugruppe bereitgestellt werden kann. Auf diese Weise kann in der Vorrichtung zum Empfangen von digitalen Multimediasignalen eine Spannungsversorgungsvorrichtung vorgesehen sein, die nicht nur die Vorrichtung zum Empfangen von digitalen Multimediasignalen mit Spannung versorgt, sondern ebenfalls eine externe Backend-Baugruppe mit einer Spannung versorgen kann. Die Vorrichtung zum Empfangen von digitalen Multimediasignalen kann somit ungeachtet der Anforderungen einer externen Backend-Baugruppe ausgelegt werden, insbesondere hinsichtlich wechselseitiger Störeinflüsse durch Hochfrequenzsignale oder Störeinflüsse durch eine Wärmeentwicklung beispielsweise durch eine gegebenenfalls vorgesehene Spannungsversorgungsvorrichtung oder anderer Wärme freisetzender Bauteile .

Mit einer derartigen Vorrichtung zum Empfangen von digitalen Multimediasignalen neben einer Vorrichtung zum Decodieren von digitalen Multimediasignalen kann ein modularer Aufbau eines digitalen Fernsehempfangsgerätes bereitgestellt werden, der eine flexible und modulare Anpassung an regionale Marktgegebenheiten erlaubt.

Gemäß der Erfindung ist die Backend-Schnittstelle ausgelegt zum lösbaren Ankoppeln einer externen Backend-Baugruppe.

Auf diese Weise kann durch das lösbare Ankoppeln die Vorrichtung zum Empfangen digitaler Multimediasignale von einer externen Backend-Baugruppe abgekoppelt werden um diese beispielsweise austauschen zu können. Ein Austausch kann beispielsweise notwendig sein, wenn die Konfigurierung einer Vorrichtung zum Empfangen von digitalen Multimediasignalen aufgrund unterschiedlicher regionaler Marktgegebenheiten eine andere Spannungsversorgungsvorrichtung benötigt oder gegebenenfalls eine andere Empfangseinheit benötigt. Andererseits kann ein Austausch einer externen Backend-Baugruppe erforderlich sein, wenn beispielsweise durch eine Weiterentwicklung eines Standards die Vorrichtung zum Empfangen von digitalen Multimediasignalen bzw. eine Frontend-Baugruppe im Wesentlichen unverändert bleiben kann, während eine weiterentwickelte externe Backend-Baugruppe eventuell einem weiterentwickelten Standard genügen kann oder beispielsweise eine erhöhte Funktionalität an der externen Backend-Baugruppe bereitgestellt werden kann, beispielsweise wenn sich der Endbenutzer dazu entschließt, ein Upgrade seiner externen Backend-Baugruppe vorzunehmen, ohne dass er damit zwingend auch die Vorrichtung zum Empfangen digitaler Multimediasignale bzw. die Frontend-Baugruppe austauschen muss.

Gemäß einer beispielhaften Ausführungsform der Erfindung weist die Backend-Schnittstelle einen Ankoppelbereich auf für eine Ankoppelung der Spannungsversorgungsvorrichtung an die Backend-Baugruppe.

Auf diese Weise kann mittels der Vorrichtung zum Empfangen digitaler Multimediasignale nicht nur eine Spannungsversorgung für die Vorrichtung zum Empfangen digitaler Multimediasignale selbst bereitgestellt werden, sondern darüber hinaus auch eine Spannungsversorgung für eine externe Backend-Baugruppe. Die entsprechende Spannungsversorgungsvorrichtung kann dabei entsprechend dem Leistungsbedarf einer externen Backend-Baugruppe ausgelegt sein.

Gemäß einer beispielhaften Ausführungsform der Erfindung weist die Frontend-Baugruppe eine Empfangsvorrichtung zum Empfangen digitaler Multimediasignale und eine Demodulationsvorrichtung zum Demodulieren digitaler Multimediasignale auf.

Auf diese Weise kann aus einer externen Signalquelle, beispielsweise einem Kabel, einem Satelliten oder einer Antenne ein digitales Multimediasignal empfangen werden und entsprechend demoduliert werden, sodass es für eine Weiterverarbeitung in einer externen Backend-Baugruppe geeignet ist.

Gemäß einer beispielhaften Ausführungsform der Erfindung sind die digitalen Multimediasignale digitale Fernsehsignale.

An dieser Stelle sei angemerkt, dass die digitalen Multimediasignale Audiosignale und Videosignale aufweisen können.

Gemäß der Erfindung wird ein modularer digitaler Multimediaempfänger bereitgestellt, mit einer erfindungsgemäßen Vorrichtung zum Empfangen von digitalen Multimediasignalen sowie einer erfindungsgemäßen Vorrichtung zum Decodieren digitaler Multimediasignale, wobei die Backend-Schnittstelle der Vorrichtung zum Empfangen von digitalen Multimediasignalen mit der Frontend-Schnittstelle der Vorrichtung zum Decodieren von digitalen Multimediasignalen verbunden ist.

Gemäß der Erfindung ist die Backend-Schnittstelle der Vorrichtung zum Empfangen von digitalen Multimediasignalen mit der Frontend-Schnittstelle der Vorrichtung zum Decodieren von digitalen Multimediasignalen über eine externe Leitung derart verbunden, dass die Vorrichtung zum Empfangen von digitalen Multimediasignalen beabstandet von der Vorrichtung zum Decodieren von digitalen Multimediasignalen angeordnet werden kann. Die Vorrichtung zum Empfangen von digitalen Multimediasignalen kann aber auch direkt an der Vorrichtung zum Decodieren von digitalen Multimediasignalen angeordnet werden, wenn beispielsweise die Backend-Schnittstelle und die Frontendschnittstelle jeweils als zueinander passende Steckbuchsen ausgelegt sind.

Es sei angemerkt, dass einzelne Merkmale selbstverständlich auch untereinander kombiniert werden können, wodurch sich zum Teil auch vorteilhafte Wirkungen einstellen können, die über die Summe der Einzelwirkungen hinausgehen. Diese und andere Aspekte der vorliegenden Erfindung werden durch die Bezugnahme auf die hiernach beschriebenen beispielhaften Ausführungsformen erläutert und verdeutlicht.

### Kurze Beschreibung der Zeichnungen

Beispielhafte Ausführungsformen werden im Folgenden mit Bezugnahme auf die folgenden Zeichnungen beschrieben.
Figur 1 zeigt einen modularen Aufbau und ein Zusammenwirken einer erfindungsgemäßen Vorrichtung zum Decodieren digitaler Multimediasignale und einer Vorrichtung zum Empfangen von digitalen Multimediasignalen gemäß einer beispielhaften Ausführungsform der Erfindung.
Figur 2 zeigt eine schematische Ansicht eines Zusammenwirkens unterschiedlicher Komponenten bezüglich der Vorrichtung zum Decodieren digitaler Multimediasignale und der Vorrichtung zum Empfangen von digitalen Multimediasignalen gemäß einer beispielhaften Ausführungsform der Erfindung.
Figur 3 zeigt eine beispielhafte Struktur einer Backend-Vorrichtung bzw. eines Backend-Prozessor IC gemäß einer beispielhaften Ausführungsform der Erfindung.

### Detaillierte Beschreibung beispielhafter Ausführungsformen

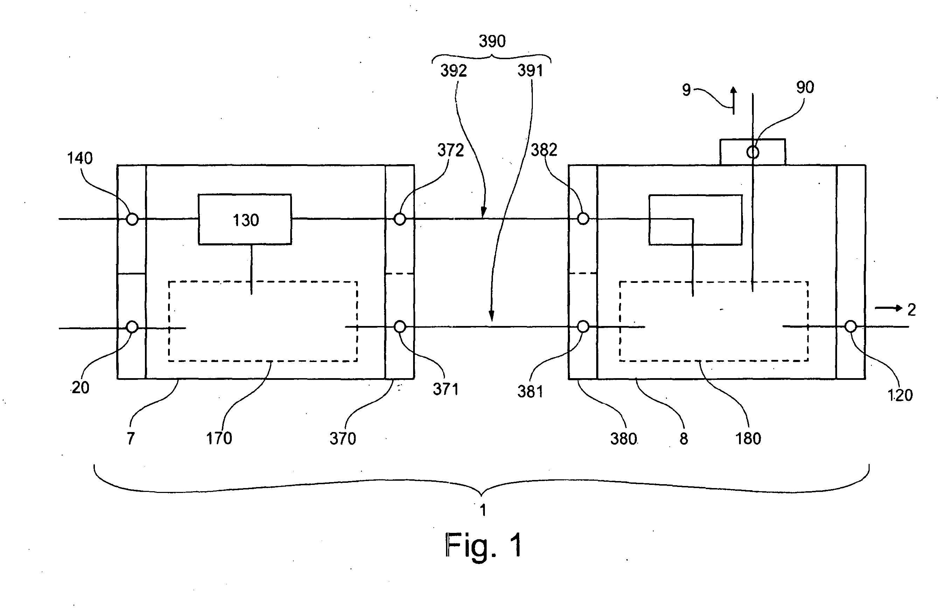

Die in Figur 1 gezeigte Ausführungsform zeigt eine Vorrichtung zum Decodieren digitaler Multimediasignale 8 sowie eine Vorrichtung zum Empfangen digitaler Multimediasignale 7. Zusammen bilden die Vorrichtung zum Decodieren digitaler Multimediasignale 8 sowie die Vorrichtung zum Empfangen digitaler Multimediasignale 7 einen modularen digitalen Multimediaempfänger 1. Die Vorrichtung zum Empfangen digitaler Multimediasignale 7 ist mit der Vorrichtung zum Decodieren digitaler Multimediasignale 8 in der hier gezeigten Ausführungsform verbunden, jedoch bezieht sich die vorliegende Erfindung auch auf die jeweilige Vorrichtung zum Decodieren digitaler Multimediasignale 8 bzw. die Vorrichtung zum Empfangen von digitalen Multimediasignalen 7 separat. Die Vorrichtung zum Decodieren digitaler Multimediasignale 8 weist eine Backend-Baugruppe 180 auf, die ausgelegt ist für eine Datenverarbeitung digitaler Multimediasignale. Ferner weist die Vorrichtung zum Decodieren digitaler Multimediasignale 8 eine High Definition Multimedia Interface (HDMI) Schnittestelle 120 auf, die ausgelegt ist zum lösbaren Ankoppeln eines Multimediagerätes 2, das jedoch selbst nicht zum Gegenstand der vorliegenden Erfindung zählt. Die HDMI-Schnittstelle 120 ist im Regelfall eine standardisierte Steckverbindung. Es ist jedoch auch möglich, die Vorrichtung zum Decodieren digitaler Multimediasignale direkt in das Multimediagerät 2 zu implementieren, etwa innerhalb des Gehäuses des Multimediagerätes 2, wobei die Schnittstelle 120 dann auch eine nicht lösbare Schnittstelle sein kann.

Ferner weist die Vorrichtung zum Decodieren digitaler Multimediasignale 8 eine Frontend-Schnittstelle 380 auf, die ausgelegt ist zum Ankoppeln einer externen Frontend-Baugruppe 170. Die Frontend-Schnittstelle 380 kann dabei einen Ankoppelbereich 381 aufweisen, über den eine externe Frontend-Baugruppe 170 angekoppelt werden kann, sowie einen weiteren Ankoppelbereich 382, über den eine externe Spannungs- bzw. Stromversorgung 130 angekoppelt werden kann, mittels derer die Vorrichtung zum Decodieren digitaler Multimediasignale 8 mit Energie versorgt werden kann, ohne dafür eine separate Spannungsversorgungseinheit zur Verfügung stellen zu müssen. Ferner kann die Vorrichtung zum Decodieren digitaler Multimediasignale 8 eine Bedienschnittstelle 90 aufweisen, um ein hier nicht gezeigtes und auch nicht zur Erfindung zugehöriges Bediengerät 9 anzukoppeln. Die Ankoppelung des Bediengerätes 9 kann dabei beispielsweise über eine Drahtverbindung realisiert werden, ebenso wie über eine Infrarotschnittstelle. Eine Infrarotschnittstelle weist dabei den Vorteil auf, dass eine fehleranfällige und platzaufwendige mechanische Steckverbindung vermieden werden kann. Über diese Bedienschnittstelle 90 kann beispielsweise eine Funkmaus oder eine Funktastatur oder sogar ein externes komplexeres Bediengerät angeschlossen werden, wie beispielsweise eine dafür ausgelegte Fernbedienung. Statt einer Infrarotankoppelung kann dabei beispielsweise auch eine Funkverbindung verwendet werden, die nicht zwingend eine hindernisfreie Übertragungsstrecke benötigt.

Ferner ist in Figur 1 eine Vorrichtung zum Empfangen von digitalen Multimediasignalen 7 vorgesehen. Diese in Figur 1 gezeigte Ausführungsform einer Vorrichtung zum Empfangen von digitalen Multimediasignalen weist eine Signaleingangsschnittstelle 20 für digitale Multimediasignale auf. An diese Signaleingangsschnittstelle 20 kann beispielsweise eine externe Signalquelle angeschlossen werden, beispielsweise eine Antenne für beispielsweise ein terrestrisch gebundenes DVB-T Signal, ein Kabel für beispielsweise eine kabelgebundene DVB-C Signalversorgung oder beispielsweise eine Satellitenemfpangsantenne zum Empfangen eines satellitengebundenen DVB-S Signals. Neben den erwähnten DVB-T, DVB-C, DVB-S Signalen können auch andere Signale empfangen werden, wie beispielsweise ein DVB-S2, ISDB-T, ATSC- oder DVB-C2/T2-Signal. An der Signaleingangsschnittstelle ist in der Regel ein Anschluss vorgesehen, um beispielsweise eine externe Empfangseinrichtung wie beispielsweise eine Antenne anschließen zu können. Ferner weist die Vorrichtung zum Empfangen von digitalen Multimediasignalen 7 in der hier gezeigten Ausführungsform ferner eine Frontend-Baugruppe 170 auf, die ausgelegt ist zum Empfangen von digitalen Multimediasignalen. In der Frontend-Baugruppe 170 können dabei über die Signaleingangsschnittstelle 20 empfangene digitale Multimediasignale verarbeitet werden und an die Backend-Schnittstelle 370 weitergegeben werden. Die Backend- Schnittstelle 370 ist beispielsweise mit einem dafür vorgesehenen Ankoppelbereich 371 vorgesehen, um eine externe Backend-Baugruppe 180 anzukoppeln. Es sein angemerkt, dass die externe Backend-Baugruppe nicht Bestandteil der modular ausgeführten Vorrichtung zum Decodieren digitaler Multimediasignale 7 gehört.

Die Vorrichtung zum Empfangen von digitalen Multimediasignalen 7 weist ferner eine Spannungsversorgungsvorrichtung 130 auf für die Spannungsversorgung der Vorrichtung zum Empfangen von digitalen Multimediasignalen 7. Diese Spannungsversorgungsvorrichtung 130 kann beispielsweise über eine entsprechende Schnittstelle 140 an ein externes Versorgungsnetz angeschlossen werden. Die Spannungsversorgungsvorrichtung 130 kann beispielsweise realisiert werden in Form eines Transformators mit beispielsweise einem Gleichrichter und einem Festspannungsregler oder in Form eines Schaltnetzteils, um entsprechende Versorgungsspannungen für die Vorrichtung zum Empfangen von digitalen Multimediasignalen 7 bereitzustellen.

Die Vorrichtung zum Empfangen von digitalen Multimediasignalen kann im Bereich der Backend-Schnittstelle 370 ferner einen Ankoppelbereich 372 aufweisen, der ausgelegt ist zum Ankoppeln der Spannungsversorgungsvorrichtung an eine angekoppelte externe Backend-Baugruppe 180. Auf diese Weise kann mittels der in der Vorrichtung zum Empfangen von digitalen Multimediasignalen 7 vorgesehenen Spannungsversorgungsvorrichtung 130 nicht nur eine Spannungsversorgung der Vorrichtung zum Empfangen von digitalen Multimediasignalen vorgenommen werden, sondern darüber hinaus auch eine Spannungsversorgung einer Vorrichtung zum Decodieren digitaler Multimediasignale 8.

Der modulare digitale Multimediaempfänger 1 gemäß der in Figur 1 gezeigten Ausführungsform weist zwischen der Vorrichtung zum Empfangen digitaler Multimediasignale 7 und der Vorrichtung zum Decodieren digitaler Multimediasignale 8 beispielsweise eine Verbindungsvorrichtung 390 auf, die beispielsweise im Form einer mehrpoligen Leitung vorgesehen sein kann. Dabei kann die mehrpolige Leitung einen Leitungsbereich oder eine Leitungsgruppe 391 aufweisen, die ausgelegt ist zum Verbinden des Ankoppelbereichs 371 der Backend-Schnittstelle 370 mit dem Ankoppelbereich 381 der Frontend-Schnittstelle 380. Darüber hinaus kann die Verbindungsvorrichtung 390 einen Leitungsbereich 392 aufweisen, der ausgelegt ist zum Verbinden des Ankoppelbereichs 372 an der Vorrichtung zum Empfangen digitaler Multimediasignale 7 und dem Ankoppelbereich 382 der Vorrichtung zum Decodieren digitaler Multimediasignale 8, um auf diese Weise eine Spannungsversorgung bzw. Energieversorgung der Komponenten der Vorrichtung zum Decodieren digitaler Multimediasignale 8 zu ermöglichen. Auf diese Weise enthält die Verbindungsvorrichtung 390 einen Energieversorgungsleitungsteil 392 und einen Datenübertragungsleitungsbereich 391, die jeweils eine Mehrzahl von Leitungen aufweisen können. In der praktischen Ausführung kann die Ankoppelung der beiden Vorrichtungen 7 und 8 mittels einer Kabelverbindung und entsprechenden Steckern bzw. Buchsen erfolgen, wobei die Pin-Belegung der Stecker entsprechend so vorgesehen sein kann, dass eine Konformität der Leitungsbelegung bezüglich Energieübertragung und Datenübertragung gewährleistet ist. Eine derartige Leitungs- und Steckerverbindung wird der Fachmann nach seinem fachmännischen Wissen vorsehen.

Alternativ zu der in Figur 1 gezeigten Ausführungsform kann beispielsweise die Bedienschnittstelle 90 auch als ein Ankoppelbereich im Bereich der Frontend-Schnittstelle 380 ausgeführt sein, wobei in diesem Fall an der entsprechenden Backend- Schnittstelle 370 ebenfalls ein Ankoppelbereich für eine Bedienschnittstelle vorgesehen sein kann, um beispielsweise die Bedienelemente 9 über eine entsprechende dann vorzusehende Schnittstelle an die Vorrichtung zum Empfangen digitaler Multimediasignale implementiert sein kann. Die Verbindungsvorrichtung 390 bzw. Leitung kann dann einen zusätzlichen Leitungsteil bzw. eine Leitungsgruppe aufweisen, die für eine Übertragung von Bedienungssignalen ausgelegt ist.

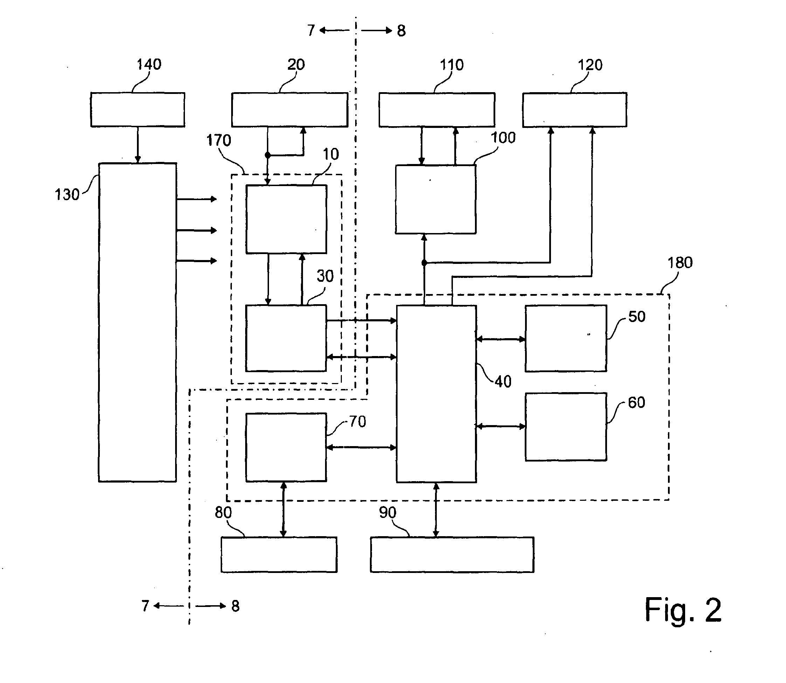

Figur 2 zeigt eine schematische Ansicht der funktionalen Zusammenhänge zwischen unterschiedlichen Komponenten einer Vorrichtung zum Empfangen digitaler Multimediasignale 7 bzw. einer Vorrichtung zum Decodieren digitaler Multimediasignale 8 sowie mit äußeren Komponenten davon. Die gestrichpunktete Linie zeigt dabei die Trennung zwischen der Vorrichtung zum Empfangen von digitaler Multimediasignale 7 und der Vorrichtung zum Decodieren digitaler Multimediasignale 8 auf. Die Vorrichtung zum Empfangen digitaler Multimediasignale 7 weist beispielsweise ein Frontend-Modul 170 auf mit einem Tuner IC sowie einem Demodulator IC, die miteinander im Datenaustausch gekoppelt sind. In der hier gezeigten Ausführungsform erfolgt über den Demodulator IC 30 eine Ankoppelung über die entsprechenden hier nicht näher bezeichneten Schnittstellen mit dem Backend- Modul 180. Ferner ist die Vorrichtung zum Empfangen digitaler Multimediasignale mit einer Signaleingangsschnittstelle 20 verbunden, über die beispielsweise in Form von HF-Signalen Eingangssignale an das Frontend-Modul weitergegeben werden können. Ferner ist eine Spannungsversorgungseinheit 30 mit einem Stromversorgungsanschluss 140 vorgesehen, der zur Spannungsversorgung der Komponenten der Vorrichtung zum Empfangen digitaler Multimediasignale 7 dient. Die weiteren funktionellen Verknüpfungen sind in der in Figur 2 gezeigten schematischen Darstellung nicht im Detail ausgeführt. Die Vorrichtung zum Decodieren digitaler Multimediasignale 8 weist neben dem Backend- Modul 180 beispielsweise eine Schnittstelle 90 für Bedien- und Anzeigeelemente auf, sowie einen Anschluss für beispielsweise eine Smartcard 80 in Form eines Smartcard Slotes. Ferner ist ein Ausgang zum Anschluss eines HDMI-fähigen Multimediagerätes 120 vorgesehen. Weiterhin können beispielsweise eine Remodulatorbaugruppe 100 sowie Remodulator-HF-Anschlüsse 110 vorgesehen sein. Das Backendmodul 180 kann dabei beispielsweise einen Backend-Prozessor IC 40, einen RAM-Speicher 50, einen Flash-Speicher 60 und einen Smartcard IC 70 aufweisen. Der Smartcard IC kann dabei beispielsweise mit der Schnittstelle für die Smartcard 80 verbunden sein.

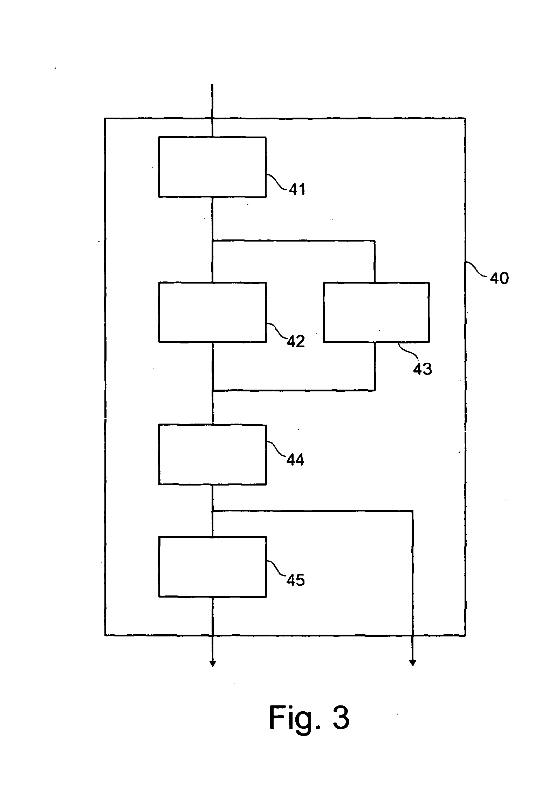

Figur 3 zeigt eine detailliertere schematische Darstellung eines Backend-Prozessors IC 40 gemäß einer beispielhaften Ausführungsform der Erfindung. In diesem Backend-Prozessor IC kann beispielsweise eine Demultiplexeinheit 41, eine Descramblingeinheit 42 bzw. eine Entschlüsselungseinheit 43, eine MPEG-Decodierungseinheit 44 sowie optional eine Digital-/Analogwandlereinheit 45 vorgesehen sein. Die Digital-/Analogwandlereinheit 45 ist insbesondere für die Fälle vorgesehen, in denen das von der MPEG-Decodierungseinheit ausgegebene Signal an ein Gerät weitergegeben werden soll, das analog fähig ist, während die Digital-/Analogwandlereinheit auch umgangen werden kann, wenn das angeschlossene Multimediagerät digitalfähig ist. Gemäß einer Ausführungsform wird beispielsweise das in die Datenverarbeitungeinheit 40 eingespeiste Signal durch eine Demultiplexeinheit 41 und eine Descramblingeinheit 42 aufbereitet, um ein Signal für einen Kanal zu isolieren. Das kanalisolierte Signal wird dann durch eine Entschlüsselungseinheit 43 entschlüsselt und dann MPEG decodiert, sodass ein darstellbares Femsehsignal erhalten wird.

Es sollte angemerkt werden, dass die vorliegende Erfindung neben dem Empfang für digitale Fernsehsignale ebenfalls für dem Empfang von digitalen Rundfunksignalen jeder Art angewendet werden kann, insbesondere für jegliche Aussendung von Video- und/oder Audiosignalen.

Es sei angemerkt, dass der Begriff "umfassend" weitere Elemente und Verfahrensschritte nicht ausschließt, ebenso wie der Begriff "ein" und "eine" mehrere Elemente und Schritte nicht ausschließen.

### Bezugszeichenliste

- 1: Vorrichtung zum Empfang digitaler Fernsehsignale
- 2: Multimediagerät
- 7: Vorrichtung zum Empfangen digitaler Multimediasignale
- 8: Vorrichtung zum Decodieren digitaler Multimediasignale
- 9: Bediengerät
- 10: Tuner IC
- 20: HF-Signalanschlüsse
- 30: Demodulator IC
- 40: Backend Prozessor IC
- 41: Demultiplexeinheit
- 42: Descramblingeinheit
- 43: Entschlüsselungseinheit
- 44: MPEG Dekodierungseinheit
- 45: Digital/Analog Wandlereinheit
- 50: RAM Speicher
- 60: Flash Speicher
- 70: Smartcard IC
- 80: Smartcard-Slot
- 90: Bedien- und Anzeigeelemente
- 100: Remodulator-Baugruppe
- 110: Remodulator-HF-Anschlüsse
- 120: RCA/Toslink Audio- und Video-Ausgänge bzw. HDMI-Schnittstelle
- 130: Stromversorgungsschaltung
- 140: Stromversorgungsanschluß
- 170: Frontend-Modul bzw. -Baugruppe
- 180: Backend-Modul bzw. -Baugruppe
- 370: Backend-Schnittstelle
- 371: Ankoppelbereich Datenübertragung Backend-Schnittstelle
- 372: Ankoppelbereich Spannungsversorgung Backend-Schnittstelle
- 380: Frontend-Schnittstelle
- 381: Ankoppelbereich Datenübertragung Frontend-Schnittstelle
- 382: Ankoppelbereich Spannungsversorgung Frontend-Schnittstelle
- 390: Verbindungsvorrichtung bzw. Leitung bzw. Leitungsbündel
- 391: Leitungsgruppe Datenübertragung
- 392: Leitungsgruppe Spannungsversorgung

## Patentansprüche

1. Modularer Digitaler Multimediaempfänger, aufweisend:
eine Vorrichtung zum Empfangen von digitalen Multimediasignalen (7) mit einer Signaleingangsschnittstelle (20) für digitale Multimediasignale, einer Frontend-Baugruppe (170), die ausgelegt ist zum Empfangen von digitalen Multimediasignalen, und einer Spannungsversorgungsvorrichtung (130) für die Vorrichtung zum Empfangen von digitalen Multimediasignalen (7),
eine Vorrichtung zum Decodieren digitaler Multimediasignale (8) in Form eines Sticks mit einer Backend-Baugruppe (180), die ausgelegt ist für die Datenverarbeitung digitaler Multimediasignale, und einer HDMI Schnittstelle (120), die ausgelegt ist zum direkten lösbaren Ankoppeln eines Multimediagerätes (2),
wobei die Vorrichtung zum Empfangen von digitalen Multimediasignalen (7) eine Backend-Schnittstelle (370) aufweist, die ausgelegt ist zum Ankoppeln der Backend-Baugruppe (180) der Vorrichtung zum Decodieren digitaler Multimediasignale (8),
wobei die Vorrichtung zum Decodieren digitaler Multimediasignale (8)eine Frontend-Schnittstelle (380) aufweist, die ausgelegt ist zum Ankoppeln der Frontend-Baugruppe (170),
wobei die Backend-Schnittstelle (370) der Vorrichtung zum Empfangen digitaler Multimediasignale (7) mit der Frontend-Schnittstelle (380) des Sticks (8) über eine externe Leitung (390) derart verbindbar ist, dass die Vorrichtung zum Empfangen von digitalen Multimediasignalen (7) beabstandet von der Vorrichtung zum Decodieren digitaler Multimediasignale (8) angeordnet werden kann.

2. Modularer Digitaler Multimediaempfänger nach Anspruch 1, wobei die Frontend-Schnittstelle (380) ausgelegt ist zum lösbaren Ankoppeln der Frontend-Baugruppe (170).

3. Modularer Digitaler Multimediaempfänger nach einem der Ansprüche 1 und 2, wobei die Frontend-Schnittstelle (380) einen Frontend-Schnittstelle (382) aufweist zur Ankopplung der Spannungsversorgung (130) an die Vorrichtung zum Decodieren digitaler Multimediasignale (8).

4. Modularer Digitaler Multimediaempfänger nach einem der Ansprüche 1 bis 3, wobei die Backend-Baugruppe (180) wenigstens eine Baueinheit aufweist aus einer Gruppe bestehend aus:
einer Datenverarbeitungseinheit (40);
einer RAM-Speichereinheit (50);
einer Flash-Speichereinheit (60);
einer Smartcard-Verarbeitungseinheit (70).

5. Modularer Digitaler Multimediaempfänger nach Anspruch 4, wobei die Datenverarbeitungseinheit (40) wenigstens eine Baueinheit aufweist aus einer Gruppe bestehend aus:
einer Demultiplexeinheit (41);
einer Descramblingeinheit (42);
einer Entschlüsselungseinheit (43);
einer MPEG Dekodierungseinheit (44);
einer Digital/Analog Wandlereinheit (45).

6. Modularer Digitaler Multimediaempfänger nach Anspruch 4, wobei die Datenverarbeitungseinheit (40) eine Smartcard-Verarbeitungseinheit (70) sowie entweder eine Descramblingeinheit (42) oder eine Entschlüsselungseinheit (43) zum Empfang verschlüsselter Programme aufweist.

7. Modularer Digitaler Multimediaempfänger nach Anspruch 4, wobei die Backend-Baugruppe (170) wenigstens eine Datenverarbeitungseinheit (40), eine RAM-Speichereinheit (50) und eine Flash-Speichereinheit (60) aufweist und die Datenverarbeitungseinheit wenigstens eine Demultiplexeinheit (41), eine MPEG Dekodierungseinheit (44) und eine Digital/Analog Wandlereinheit (45) aufweist.

8. Modularer Digitaler Multimediaempfänger nach einem der Ansprüche 1 bis 7, ferner aufweisend eine Bedienschnittstelle (90), die ausgelegt ist, um einen Datenaustausch zwischen einem Bediengerät (9) und der Vorrichtung zum Decodieren digitaler Multimediasignale (8) zu ermöglichen.

9. Modularer Digitaler Multimediaempfänger nach Anspruch 8, wobei die Bedienschnittstelle (90) eine Infrarotschnittstelle ist.

10. Modularer Digitaler Multimediaempfänger nach einem der Ansprüche 1 bis 9, wobei die Backend-Schnittstelle (370) ausgelegt ist zum lösbaren Ankoppeln der Backend-Baugruppe (180).

11. Modularer Digitaler Multimediaempfänger nach einem der Ansprüche 1 bis 10, wobei die Backend-Schnittstelle (370) einen Ankoppelbereich (372) aufweist für eine Ankopplung der Spannungsversorgungsvorrichtung (130) an die ankoppelbare Backend-Baugruppe (180).

12. Modularer Digitaler Multimediaempfänger nach einem der Ansprüche 1 bis 11, wobei die Frontend-Baugruppe (170) eine Empfangsvorrichtung (10) zum Empfangen digitaler Multimediasignale und eine Demodulationsvorrichtung (30) zum Demodulieren digitaler Multimediasignale aufweist.

13. Modularer Digitaler Multimediaempfänger nach einem der Ansprüche 1 bis 12, wobei die digitalen Multimediasignale digitale Fernsehsignale sind.

## Claims

1. Modular digital multimedia receiver having:
a device for receiving digital multimedia signals (7) with a signal input interface (20) for digital multimedia signals, a front-end assembly (170), which is designed to receive digital multimedia signals, and a voltage supply device (130) for the device for receiving digital multimedia signals(7),
a device for decoding digital multimedia signals (8) in the form of a stick with a back-end assembly (180), which is designed for the data processing of digital multimedia signals, and an HDMI interface (120), which is designed for the direct detachable coupling of a multimedia device (2),
wherein the device for receiving digital multimedia signals (7) has a back-end interface (370), which back-end interface is designed for coupling the back-end assembly (180) of the device for decoding digital multimedia signals (8),
wherein the device for decoding digital multimedia signals (8) has a front-end interface (380), which is designed for coupling the front end assembly (170),
wherein the back-end interface (370) of the device for receiving digital multimedia signals (7) can be connected to the front-end interface (380) of the stick (8) via an external line (390) such that the device for receiving digital multimedia signals (7) can be arranged spaced apart from the device for decoding digital multimedia signals (8).

2. Modular digital multimedia receiver according to claim 1, wherein the front-end interface (380) is designed for coupling the front-end assembly (170) in a detachable manner.

3. Modular digital multimedia receiver according to any one of claims 1 and 2, wherein the front-end interface (380) has a front-end interface (382) for coupling the voltage supply (130) to the device for decoding digital multimedia signals (8).

4. Modular digital multimedia receiver according to any one of claims 1 to 3, wherein the back-end assembly (180) has at least one unit of a group consisting of:
a data processing unit (40);
a RAM storage unit (50);
a flash storage unit (60);
a smart card processing unit (70).

5. Modular digital multimedia receiver according to claim 4, wherein the data processing unit (40) has at least one unit of a group consisting of:
a demultiplex unit (41);
a descrambling unit (42);
a decryption unit (43);
an MPEG decoding unit (44);
a digital/analog converter unit (45).

6. Modular digital multimedia receiver according to claim 4, wherein the data processing unit (40) has a smart card processing unit (7) as well as either a descrambling unit (42) or an decryption unit (43) for receiving encrypted programs.

7. Modular digital multimedia receiver according to claim 4, wherein the back-end assembly (170) has at least one data processing unit (40), a RAM storage unit (50) and a flash storage unit (60) and the data processing unit has at least one demultiplex unit (41), an MPEG decoding unit (44) and a digital/analog converter (45).

8. Modular digital multimedia receiver according to any one of claims 1 to 7, further having an operator interface (90), which is designed to render possible a data exchange between an operating device (9) and the device for decoding digital multimedia signals (8).

9. Modular digital multimedia receiver according to claim 8, wherein the operator interface (90) is an infrared interface.

10. Modular digital multimedia receiver according to any one of claims 1 to 9, wherein the back-end interface (370) is designed for coupling the back-end assembly (180) in a detachable manner.

11. Modular digital multimedia receiver according to any one of claims 1 to 10, wherein the back-end interface (370) has a coupling region (372) for coupling the voltage supply device (130) to the back-end assembly (180) that can be coupled.

12. Modular digital multimedia receiver according to any one of claims 1 to 11, wherein the front-end assembly (170) has a receiver device (10) for receiving digital multimedia signals and a demodulation device (30) for demodulating digital multimedia signals.

13. Modular digital multimedia receiver according to any one of claims 1 to 12, wherein the digital multimedia signals are digital television signals.

## Revendications

1. Récepteur multimédia numérique modulaire comprenant :
un dispositif pour la réception de signaux multimédia (7) numériques avec une interface d'entrée de signal (20) pour des signaux multimédia numériques, un ensemble frontal (170), qui est conçu pour la réception de signaux multimédia numériques, et un dispositif d'alimentation en tension (130) pour le dispositif pour la réception de signaux multimédia (7) numériques,
un dispositif pour le décodage de signaux multimédia (8) numériques sous la forme d'un stick avec un ensemble dorsal (180), qui est conçu pour le traitement de données de signaux multimédia numériques, et une interface HDMI (120), qui est conçue pour le rattachement amovible direct d'un appareil multimédia (2), le dispositif pour la réception de signaux multimédia (7) numériques comprenant une interface dorsale (370), qui est conçue pour le rattachement de l'ensemble dorsal (180) du dispositif pour le décodage de signaux multimédia numériques (8),
le dispositif pour le décodage de signaux multimédia numériques (8) comprenant une interface frontale (380), qui est conçue pour le rattachement de l'ensemble frontal (170),
l'interface dorsale (370) du dispositif pour la réception de signaux multimédia numériques (7) pouvant être reliée à l'interface frontale (380) du stick (8) par l'intermédiaire d'une ligne (390) externe, de telle sorte que le dispositif pour la réception de signaux multimédia numériques (7) peut être disposé à distance du dispositif pour le décodage de signaux multimédia numériques (8).

2. Récepteur multimédia numérique modulaire selon la revendication 1, l'interface frontale (380) étant conçue pour le rattachement amovible de l'ensemble frontal (170).

3. Récepteur multimédia numérique modulaire selon l'une quelconque des revendications 1 et 2, l'interface frontale (380) comprenant une interface frontale (382) pour le rattachement de l'alimentation en tension (130) au dispositif pour le décodage de signaux multimédia numériques (8).

4. Récepteur multimédia numérique modulaire selon l'une quelconque des revendications 1 à 3, l'ensemble dorsal (180) comprenant au moins un module à base d'un groupe constitué des éléments suivants :
une unité de traitement de données (40) ;
une unité de mémoire RAM (50) ;
une unité de mémoire flash (60) ;
une unité de traitement à smartcard (70).

5. Récepteur multimédia numérique modulaire selon la revendication 4, l'unité de traitement de données (40) comprenant au moins un module à base d'un groupe constitué des éléments suivants :
une unité de démultiplexage (41) ;
une unité de désembrouillage (42) ;
une unité de décodage (43) ;
une unité de décodage MPEG (44) ;
une unité de conversion numérique/analogique (45).

6. Récepteur multimédia numérique modulaire selon la revendication 4, l'unité de traitement de données (40) comprenant une unité de traitement à smartcard (70) ainsi qu'une unité de désembrouillage (42) ou une unité de décodage (43) pour la réception de programmes codés.

7. Récepteur multimédia numérique modulaire selon la revendication 4, l'ensemble dorsal (170) comprenant au moins une unité de traitement de données (40), une unité de mémoire RAM (50) et une unité de mémoire flash (60) et l'unité de traitement de données comprenant au moins une unité de démultiplexage (41), une unité de décodage MPEG (44) et une unité de conversion numérique/analogique (45).

8. Récepteur multimédia numérique modulaire selon l'une quelconque des revendications 1 à 7, comprenant également une interface de commande (90), qui est conçue pour permettre un échange de données entre un appareil de commande (9) et le dispositif pour le décodage de signaux multimédia numériques (8).

9. Récepteur multimédia numérique modulaire selon la revendication 8, l'interface de commande (90) étant une interface infrarouge.

10. Récepteur multimédia numérique modulaire selon l'une quelconque des revendications 1 à 9, l'interface dorsale (370) étant conçue pour le rattachement amovible de l'ensemble dorsal (180).

11. Récepteur multimédia numérique modulaire selon l'une quelconque des revendications 1 à 10, l'interface dorsale (370) comprenant une zone de rattachement (372) pour un rattachement du dispositif d'alimentation en tension (130) à l'ensemble dorsal (180) pouvant être rattaché.

12. Récepteur multimédia numérique modulaire selon l'une quelconque des revendications 1 à 11, l'ensemble frontal (170) comprenant un dispositif de réception (10) pour la réception de signaux multimédia numériques et un dispositif de démodulation (30) pour la démodulation de signaux multimédia numériques.

13. Récepteur multimédia numérique modulaire selon l'une quelconque des revendications 1 à 12, les signaux multimédia numériques étant des signaux numériques de télévision.
